# EUROPEAN PATENT APPLICATION

(11) **EP 1 871 138 A2**
(43) Date of publication of application: **26.12.2007**
(21) Application number: 07012200.7
(22) Date of filing: 21.06.2007
(51) Int. Cl.: H04Q 7/38, H04L 12/22

(54) **Method and apparatus for security sequence numbering in a wireless communications system**

(30) Priority: 22.06.2006 US 805471 P
(71) Applicant: Innovative Sonic Limited, Road Town Tortola (VG)
(72) Inventor: Tseng, Li-Chih, Peitou, Tapei City (TW); Jiang, Sam Shiaw-Shiang, Peitou, Tapei City (TW)
(74) Representative: Schaeberle, Steffen

(57) **Abstract**

To eliminate overhead in a wireless communications system, a method of performing security sequence numbering uses a first sequence number in a first protocol entity as a parameter of a first security function (302), and uses the first sequence number in a second protocol entity as a parameter of a second security function (304). The first security function is different from the second security function.

## Description

This application claims the benefit of the filing date of U.S. Provisional Patent Application No. 60/805,471, filed on June 22, 2006, the contents of which are hereby incorporated by reference.

The present invention relates to a method for security sequence numbering and related communications device according to the pre-characterizing clauses of claims 1 and 2.

In a 3^{rd} generation (3G) mobile telecommunications system, ciphering and integrity protection are two security features used to ensure confidential user data transmission. Section 6.5.4 of 3GPP TS 33.102 describes an integrity protection sequence number COUNT-I. The integrity sequence number COUNT-I is 32 bits long. For signaling radio bearers RB 0-4 there is one COUNT-I value per uplink signaling RB and one COUNT-I value per downlink signaling RB. COUNT-I is composed of two parts: a. "short" sequence number and a "long" sequence number. The "short" sequence number forms least significant bits of COUNT-I, whereas the "long" sequence number forms most significant bits of COUNT-I. The "short" sequence number is a 4-bit RRC sequence number (RRC SN) that is available in each RRC PDU. The "long" sequence number is a 28-bit RRC hyper frame number (RRC HFN), which is incremented at each RRC SN cycle.

Section 6.6.4 of 3GPP TS 33.102 describes a ciphering sequence number COUNT-C. The ciphering sequence number COUNT-C is 32 bits long. Each uplink RB and each downlink RB using RLC AM or RLC UM has one COUNT-C value. For all transparent mode RLC radio bearers of the same CN domain, COUNT-C is the same, and COUNT-C is also the same for uplink and downlink. COUNT-C is composed of two parts: a "short" sequence number and a "long" sequence number. The short sequence number forms least significant bits of COUNT-C, whereas the long sequence number forms most significant bits of COUNT-C. Update of COUNT-C depends on transmission mode. The use of different sequence numbers for integrity protection and ciphering causes overhead, making transmission inefficient.

This in mind, the present invention aims at providing a method for security sequence numbering and related communications device that reduces overhead.

This is achieved by a method for security sequence numbering and related communications device according to claims 1 and 2. The dependent claims pertain to corresponding further developments and improvements.

As will be seen more clearly from the detailed description following below, the claimed method for security sequence numbering and related communications device includes using a first sequence number in a second protocol entity as a parameter of a second security function.

In the following, the invention is further illustrated by way of example, taking reference to the accompanying drawings. Thereof
Fig. 1 is a function block diagram of a wireless communications device,
Fig. 2 is a diagram of program code of Fig. 1, and
Fig. 3 is a flowchart of a process according to the present invention.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

3GPP TS 33.102, "3G Security; Security architecture," defines a security architecture for the 3G mobile telecommunications system. The security architecture can be categorized by security features and security mechanisms. Security features are service capabilities that meet one or more security requirements, whereas security mechanisms are elements used to realize the security features. For example, user data confidentiality is one of the security features, and a stream cipher using a derived cipher key is the security mechanism that realizes the user data confidentiality security feature.

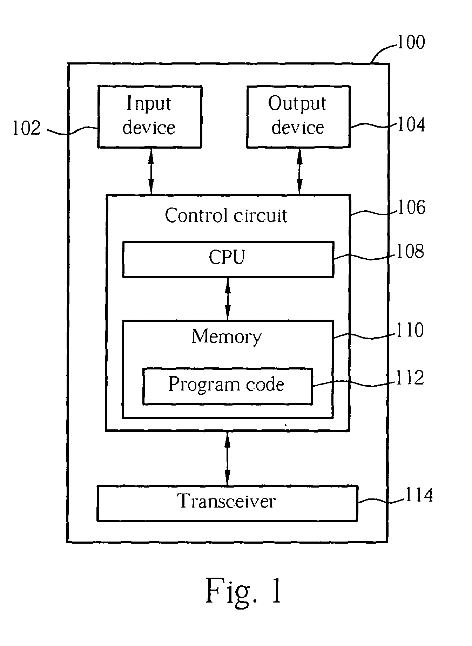

Please refer to Fig. 1, which is a function block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

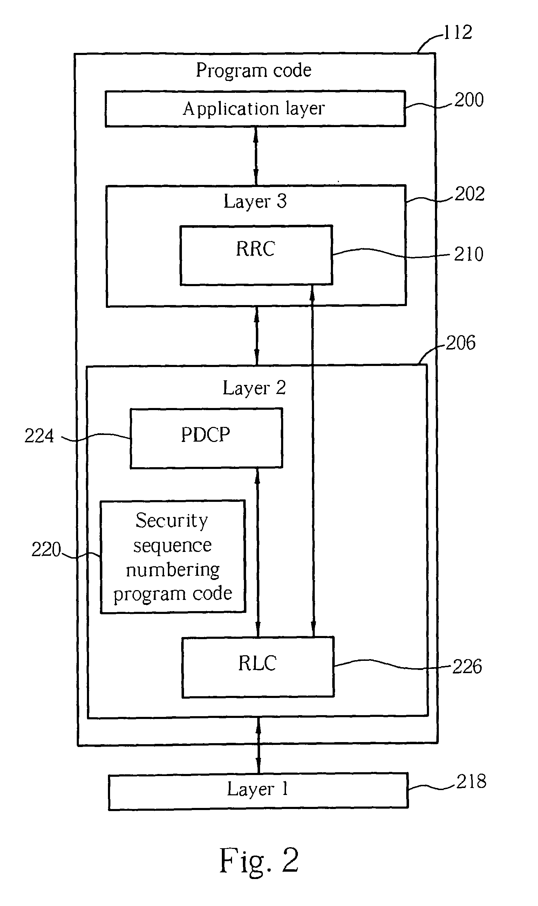

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. ln LTE, the Layer 3 202 comprises a radio resource control (RRC) entity 210. The RRC entity 210 provides an RRC SN for each RRC message to facilitate integrity protection. The Layer 2 206 comprises two sub-layers: a radio link control (RLC) entity 226 and a packet data convergence protocol (PDCP) entity 224. The PDCP entity 224 is an upper layer to the RLC entity 226. Primary functions of the RLC entity 226 include segmentation, reassembly, concatenation, padding, retransmission, sequence check, and duplication detection on transmitted data or control instructions. The PDCP entity 224 is primarily responsible for compression/decompression of headers, transfer of user data, and maintenance of PDCP sequence numbers.

In LTE, the PDCP entity 224 must provide a PDCP SN for each packet, i.e. for each RLC SDU, to facilitate ciphering functionality. The RLC entity 226 can use the PDCP SNs when performing re-ordering, duplication detection, flow control, and ARQ functionalities. Thus, it is possible that there is no extra RLC SN field in the RLC header of a RLC PDU to reduce protocol overhead. To increase efficiency during handover, the program code 112 comprises a security sequence numbering program code 220.

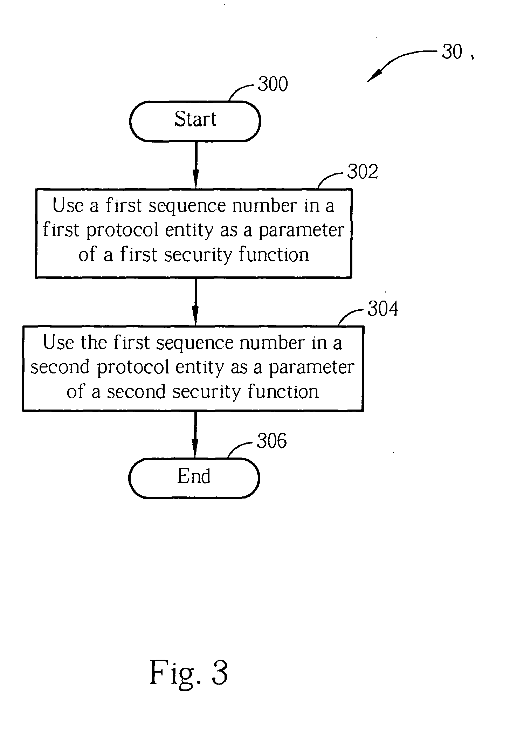

Please refer to Fig. 3, which is a flowchart of a process 30 according to a first embodiment of the present invention. The process 30 is utilized for data framing in the wireless communications system, and can be compiled into the security sequence numbering program code 220. The process 30 comprises the following steps:
Step 300: Start.
Step 302: Use a first sequence number in a first protocol entity as a parameter of a first security function.
Step 304: Use the first sequence number in a second protocol entity as a parameter of a second security function.
Step 306: End.

In the process 30, the first security function could be integrity protection, and the second security function could be ciphering. Further, the first protocol entity and the second protocol entity can be in the same layer. The same layer could be the PDCP layer or a radio resource control (RRC) layer. Also, the first sequence number could be further used in a third protocol entity, such as an RLC entity or a medium access control (MAC) entity. Finally, the first protocol entity and the second protocol entity could also be in different layers. For example, the first entity is the RRC entity which provides integrity protection and the second entity is the PDCP entity which provides ciphering.

In summary, the present invention uses one sequence number in the first security function of the first protocol entity and the second security function of the second protocol entity to reduce overhead and complexity compared to the prior art.

## Claims

1. A method of performing security sequence numbering in a wireless communications system, the method comprising:
using a first sequence number in a first protocol entity as a parameter of a first security function (302); and
**characterized by**:
using the first sequence number in a second protocol entity as a parameter of a second security function (304);
wherein the first security function is different from the second security function.

2. A communications device (100) utilized in a wireless communications system for performing security sequence numbering, the communications device comprising:
a control circuit (106) for realizing functions of the communications device;
a central processing unit (108) installed in the control circuit for executing program codes to operate the control circuit; and
a memory (110) coupled to the central processing unit and comprising:
program code for using a first sequence number in a first protocol entity as a parameter of a first security function (112, 220, 302); and
**characterized by** the memory further comprising:
program code for using the first sequence number in a second protocol entity as a parameter of a second security function (112, 220,304);
wherein the first security function is different from the second security function.

3. The method of claim 1 and the communications device of claim 2,
**characterized in that** the first security function is integrity protection.

4. The method of claim 1 and the communications device of claim 2,
**characterized in that** the second security function is ciphering.

5. The method of claim 1 and the communications device of claim 2, **characterized in that** the first protocol entity and the second protocol entity are in a same layer.

6. The method of claim 4 and the communications device of claim 4, **characterized in that** the same layer is a radio resource control layer.

7. The method of claim 4 and the communications device of claim 4, **characterized in that** the same layer is a packet data convergence protocol layer.

8. The method of claim 1 and the communications device of claim 2, **characterized by** using the first sequence number in a third protocol entity.

9. The method of claim 1 and the communications device of claim 2, **characterized in that** the first protocol entity and the second protocol entity are in different layers.

10. The method of claim 9 and the communications device of claim 9, **characterized in that** the first security function is integrity protection, the first protocol entity is radio resource control layer, the second security function is ciphering, and the second protocol entity is packet data convergence protocol layer.
